# FASCICULE DE BREVET EUROPEEN

(11) **EP 3 304 832 B1**
(45) Date de publication et mention de la délivrance du brevet: **16.10.2019**
(21) Numéro de dépôt: 16723767.6
(22) Date de dépôt: 20.05.2016
(51) Int. Cl.: H04L 12/803, H04L 12/733, H04L 12/741, H04L 12/761, H04L 29/06, H04B 3/54

(54) **PROCÉDÉ D'OBTENTION D'UNE ROUTE DE COMMUNICATION PAR COURANTS PORTEURS EN LIGNE**
VERFAHREN ZUR EINRICHTUNG EINER KOMMUNIKATIONSSTRECKE DURCH STROMLEITUNGSKOMMUNIKATION
METHOD FOR OBTAINING A COMMUNICATION ROUTE BY POWERLINE COMMUNICATION

(30) Priorité: 26.05.2015 FR 1554680
(43) Date de publication de la demande: 11.04.2018
(73) Titulaire: Sagemcom Energy & Telecom SAS, 92500 Rueil-Malmaison (FR)
(72) Inventeur: TEBOULLE, Henri, 92500 Rueil Malmaison (FR); ROTER, Ziv, 92500 Rueil Malmaison (FR)
(74) Mandataire: Cabinet Le Guen Maillet
(86) Numéro de dépôt international: PCT/EP2016/061388
(87) Numéro de publication internationale: WO 2016/188889

(56) Documents cités:
- US-A1- 2012 182 881
- US-B1- 9 008 073
- BERSANI FRANCE TELECOM R&D H TSCHOFENIG SIEMENS NETWORKS GMBH & CO KG F: "The EAP-PSK Protocol: A Pre-Shared Key Extensible Authentication Protocol (EAP) Method; rfc4764.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 janvier 2007 (2007-01-01), XP015055052, ISSN: 0000-0003
- KAVEH RAZAZIAN ET AL: "Enhanced 6LoWPAN Ad hoc routing for G3-PLC", POWER LINE COMMUNICATIONS AND ITS APPLICATIONS (ISPLC), 2013 17TH IEEE INTERNATIONAL SYMPOSIUM ON, IEEE, 24 mars 2013 (2013-03-24), pages 137-142, XP032420381, DOI: 10.1109/ISPLC.2013.6525839 ISBN: 978-1-4673-6014-2

## Description

La présente invention concerne un procédé d'obtention d'une route de communication initiale entre un dispositif noeud et un dispositif concentrateur de données d'un réseau maillé utilisant des communications par courants porteurs en ligne, un système et des dispositifs aptes à mettre en oeuvre ledit procédé.

Le document portant le numéro de publication US9008073B1 divulgue une méthode et un dispositif de routage afin de pouvoir établir des routes de communication entre les noeuds désirant communiquer dans un réseau CPL. L'établissement des routes passe par une phase de découverte de route durant laquelle, un noeud, dit noeud source désirant communiquer avec un autre noeud, dit noeud destinataire, transmet des messages requête de route (route request « RREQ »). La transmission simultanée de RREQ peut entraîner des problèmes de congestion. Pour solutionner ce problème, D1 propose d'utiliser une route par défaut définie lors d'une phase d'association. Lorsqu'un dispositif source souhaite communiquer avec un dispositif destinataire, il consulte une table de routage et si cette table de routage contient une route valide, cette route est utilisée. Par conséquent, lorsqu'il a été possible d'initialiser la table de routage avec la route par défaut, il n'est pas nécessaire de lancer une phase de découverte de route, ce qui réduit les risques de congestion.

Les communications par courants porteurs en ligne CPL (« PowerLine Communications (PLC) » en terminologie anglo-saxonne) se développent, notamment dans le cadre des réseaux d'alimentation électrique de type AMM (Gestion de mesure automatique, « Automated Meter Management » en terminologie anglo-saxonne). Des réseaux de communication sont ainsi implémentés au-dessus de réseaux d'alimentation électrique pour la collecte automatisée, auprès de compteurs électriques intelligents (« smart meters » en anglais), de données de relevés de consommation énergétique. Les communications par courants porteurs utilisent, par exemple, des protocoles de communication tels que le protocole G3-PLC (CPL de troisième génération: « Third Generation PLC » en terminologie anglo-saxonne. ITU-T G.9903) ou PRIME (Evolution des mesures intelligentes par courants porteurs, « PoweRline Intelligent Metering Evolution » en terminologie anglo-saxonne).

De tels réseaux CPL peuvent avoir une forme d'arbre ou une forme maillée pour permettre d'étendre la portée des communications. C'est le cas par exemple dans les réseaux CPL utilisant le protocole PRIME ou le protocole G3-PLC. Les dispositifs de tels réseaux CPL sont généralement appelés *noeuds.* Un dispositif noeud, dit dispositif concentrateur de données gère le réseau CPL de manière à organiser le partage d'un même support de communication : émission de balises de synchronisation, gestion de topologie, authentification, gestion d'un adressage local temporaire au sein du réseau géré... Des dispositifs noeuds, généralement des compteurs électriques intelligents, servent alors de relais pour le compte d'autres dispositifs noeuds du réseau CPL, i.e. d'autres compteurs électriques intelligents, lorsque ces derniers n'arrivent pas à recevoir directement des informations du concentrateur de données, et à transmettre directement des informations au concentrateur de données.

Plusieurs relais peuvent ainsi être nécessaires pour permettre à un dispositif noeud de communiquer avec le concentrateur de données.

L'insertion d'un nouveau dispositif noeud dans un réseau CPL comprend un établissement d'une route de communication entre ledit dispositif noeud et le dispositif concentrateur de données. Pour ce faire, le protocole G3-PLC, par exemple, prévoit une méthode de recherche d'une route de communication initiale permettant au dispositif noeud, en collaboration avec le dispositif concentrateur de données, de déterminer quelle est la meilleure route de communication à un instant donné entre le dispositif noeud et le dispositif concentrateur de données. Lors d'une mise en oeuvre de cette méthode, toutes les routes de communication possibles entre le dispositif noeud et le dispositif concentrateur de données sont envisagées et comparées à l'aide d'une fonction de coût définie par le protocole G3-PLC ou laissée au choix d'un programmeur. La route de communication minimisant la fonction de coût est alors choisie pour chaque échange de messages entre le dispositif noeud et le dispositif concentrateur de données. Cependant, la méthode de recherche d'une route de communication initiale peut s'avérer coûteuse en termes d'utilisation d'une bande passante disponible dans le réseau CPL. Elle comprend en effet une phase de recherche d'une meilleure route de communication durant laquelle le dispositif concentrateur de données transmet en mode multidiffusion (« broadcast » en terminologie anglo-saxonne) dans le réseau CPL, une requête de recherche de route (« route request » en terminologie anglo-saxonne). Plusieurs mises en oeuvre simultanées de la phase de recherche d'une meilleure route de communication par une pluralité de dispositifs noeuds peuvent entraîner une utilisation de bande passante très importante, au point de provoquer des surcharges du réseau CPL. Il est fréquent, par exemple, qu'un réseau CPL soit surchargé lors de phases d'initialisation ou de réinitialisation du réseau CPL, car dans ce cas, tous les dispositifs noeuds du réseau CPL doivent déterminer une route de communication vers le dispositif concentrateur de données. Pour ce faire, le dispositif concentrateur de données envoie quasi simultanément une requête de recherche de route en mode multidiffusion en direction de chaque dispositif noeud du réseau CPL.

Il est souhaitable de pallier ces différents inconvénients de l'état de la technique.

Il est notamment souhaitable de proposer un procédé permettant d'éviter des surcharges du réseau CPL lorsque plusieurs dispositifs noeud doivent déterminer simultanément une route de communication vers le dispositif concentrateur de données.

Il est notamment souhaitable de fournir une solution qui soit simple à mettre en oeuvre et à faible coût.

Selon un premier aspect de la présente invention, la présente invention concerne un procédé suivant la revendication 1.

La mise en oeuvre de la méthode de recherche d'une route de communication initiale dépend donc du risque de surcharge du réseau. Lorsque le réseau risque d'être surchargé, la méthode de recherche d'une route de communication initiale n'est pas mise en oeuvre. Le procédé selon l'invention évite donc de surcharger effectivement le réseau. La méthode de recherche d'une route de communication initiale peut être mise en oeuvre lorsque le risque de surcharge du réseau a diminué.

En autorisant la mise en oeuvre d'une phase de confirmation de route sans une mise en oeuvre préalable d'une phase de recherche d'une meilleure route de communication, on évite de provoquer une surcharge du réseau. L'adresse courte du dispositif noeud apparaissant dans un format interprétable par un dispositif intermédiaire dans les messages échangés pendant la phase de confirmation de route, chaque dispositif noeud traversé par lesdits messages peut récupérer l'adresse courte attribuée au dispositif noeud et la mémoriser dans une table de routage. Par la suite, lorsque le dispositif intermédiaire reçoit un message dans lequel l'adresse du destinataire est l'adresse courte du dispositif noeud, il peut router ledit message vers le dispositif noeud.

Dans un mode de réalisation, ladite seconde phase correspondant à la phase de confirmation de route est mise en oeuvre dès réception par le dispositif noeud d'un message clôturant la première phase correspondant à la phase d'authentification.

Dans un mode de réalisation, le protocole de communication est le protocole G3-PLC.

Selon un deuxième aspect de la présente invention, l'invention concerne un procédé suivant la revendication 4.

Selon un troisième aspect de la présente invention, l'invention concerne un procédé suivant la revendication 5.

Selon un quatrième aspect de la présente invention, l'invention concerne un système suivant la revendication 6.

Selon un cinquième aspect de la présente invention, l'invention concerne un dispositif noeud suivant la revendication 7..

Selon un sixième aspect de la présente invention, l'invention concerne un dispositif concentrateur de données suivant la revendication 8.

Selon un septième aspect de la présente invention, l'invention concerne un programme d'ordinateur suivant la revendication 9.

Selon un huitième aspect de la présente invention, l'invention concerne des moyens de stockage suivant la revendication 10.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un exemple de réseau CPL sous forme d'arbre implémenté sur un réseau de fourniture d'électricité dans lequel l'invention peut être mise en oeuvre ;
- la Fig. 2A illustre schématiquement un exemple d'architecture matérielle d'un dispositif concentrateur de données du réseau CPL ;
- la Fig. 2B illustre schématiquement un exemple d'architecture matérielle d'un dispositif noeud du réseau CPL ;
- la Fig. 3 illustre schématiquement un procédé selon l'invention d'obtention d'une route de communication initiale entre un dispositif noeud et un dispositif concentrateur de données ;
- la Fig. 4 illustre schématiquement une méthode de recherche d'une route de communication initiale comprise dans le protocole G3-PLC ;
- la Fig. 5 illustre schématiquement un premier exemple de méthode alternative de recherche de route de communication initiale selon l'invention ; et,
- la Fig. 6 illustre schématiquement un second exemple de méthode alternative de recherche de route de communication initiale selon l'invention.

L'invention est décrite par la suite dans un contexte dans lequel un réseau de fourniture d'électricité sur lequel est implémenté un réseau CPL comprend un concentrateur de données relié à une pluralité de dispositifs noeuds de type compteurs électriques par des câbles d'alimentation électrique. Les communications mises en oeuvre dans ce réseau CPL utilisent le protocole G3-PLC.

L'invention s'applique aussi dans un contexte plus large. L'invention s'applique notamment en cas d'utilisation de tout autre protocole de communication par courants porteurs en ligne prévoyant, lorsqu'une route de communication doit être déterminée entre deux dispositifs d'un réseau CPL, une transmission de messages en mode multidiffusion (« broadcast » en terminologie anglo-saxonne) dans le réseau CPL.

Par ailleurs, l'invention s'applique particulièrement dans le cas d'une initialisation ou d'une réinitialisation du réseau CPL, l'initialisation ou la réinitialisation du réseau CPL ayant pu être provoquée, par exemple, par une coupure d'alimentation électrique dans le réseau CPL. Cependant, l'invention s'applique aussi dès qu'un nombre important de dispositifs noeuds d'un réseau CPL doivent simultanément réinitialiser leur route de communication avec un dispositif concentrateur de données. Par exemple, l'invention s'applique lorsqu'un dispositif concentrateur de données tombe en panne et/ou est remplacé auxquels cas l'ensemble des dispositifs noeuds cherchent à s'authentifier auprès d'un dispositif concentrateur de données remplaçant ou d'un dispositif concentrateur de données voisin.

De plus, l'invention est décrite dans le cadre d'un réseau en arbre dans lequel des dispositifs noeuds communiquent avec un dispositif concentrateur de données ayant un rôle de racine du réseau CPL. L'invention s'applique aussi dans d'autres types de réseaux CPL dans lesquels des routes de communication sont à déterminer, tels que les réseaux CPL maillés.

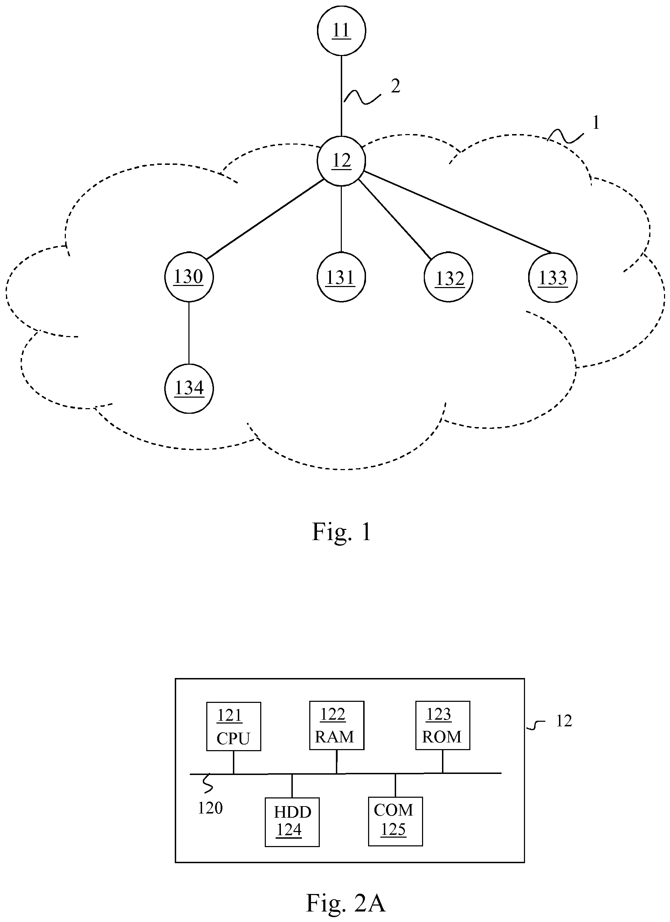

La **Fig. 1** illustre schématiquement un exemple de réseau CPL 1 sous forme d'arbre implémenté dans un réseau de fourniture d'électricité dans lequel l'invention peut être mise en oeuvre.

Ledit réseau CPL 1 comprend un dispositif concentrateur de données 12 connecté à une pluralité de dispositifs noeuds 130 à 134 de type compteurs électriques. Chaque compteur électrique supervise une installation électrique et mesure une énergie électrique consommée dans ladite installation électrique. Les compteurs électriques 130 à 133 sont reliés directement au concentrateur de données 12. Le compteur électrique 130 sert de relai au compteur électrique 134. Le dispositif concentrateur de données 12 est relié à un système d'information 11 par un réseau de communication 2 tel que par exemple le réseau internet. Dans un mode de réalisation, des communications CPL sont mises en oeuvre dans le réseau CPL 1 en utilisant le protocole G3-PLC.

La **Fig. 2A** illustre schématiquement un exemple d'architecture matérielle du dispositif concentrateur de données 12 du réseau CPL 1 mettant en oeuvre l'invention. On note que la Fig. 2A pourrait aussi illustrer schématiquement un exemple d'architecture matérielle d'un module de traitement compris dans le dispositif concentrateur de données 12 et mettant en oeuvre l'invention.

Selon l'exemple d'architecture matérielle représenté à la Fig. 2A, le dispositif concentrateur de données 12 comprend alors, reliés par un bus de communication 120 : un processeur ou CPU (« Central Processing Unit » en anglais) 121 ; une mémoire vive RAM (« Random Access Memory » en anglais) 122 ; une mémoire morte ROM (« Read Only Memory » en anglais) 123 ; une unité de stockage telle qu'un disque dur ou un lecteur de support de stockage, tel qu'un lecteur de cartes SD (« Secure Digital » en anglais) 124 ; au moins une interface de communication 125 permettant au dispositif concentrateur de données de communiquer avec les dispositifs noeuds 130 à 134.

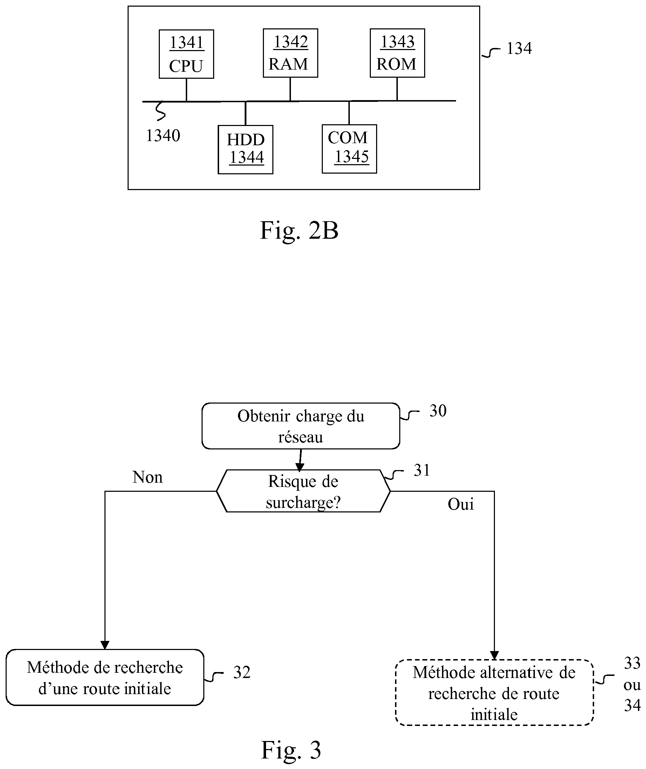

Le processeur 121 est capable d'exécuter des instructions chargées dans la RAM 122 à partir de la ROM 123, d'une mémoire externe (non représentée), d'un support de stockage (tel qu'une carte SD), ou d'un réseau de communication. Lorsque le dispositif concentrateur de données 12 est mis sous tension, le processeur 121 est capable de lire de la RAM 122 des instructions et de les exécuter. Ces instructions forment un programme d'ordinateur causant la mise en oeuvre, par le processeur 121, de tout ou partie du procédé décrit ci-après en relation avec les Figs. 3 à 6.

Le procédé décrit ci-après en relation avec les Figs. 3 à 6 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La **Fig. 2B** illustre schématiquement un exemple d'architecture matérielle d'un dispositif noeud du réseau CPL 1 mettant en oeuvre l'invention. Nous prenons ici l'exemple du dispositif noeud 134. On note que la Fig. 2B pourrait aussi illustrer schématiquement un exemple d'architecture matérielle d'un module de traitement compris dans le dispositif noeud 134 et mettant en oeuvre l'invention.

Selon l'exemple d'architecture matérielle représenté à la Fig. 2B, le dispositif noeud 134 comprend alors, reliés par un bus de communication 1340 : un processeur ou CPU (« Central Processing Unit » en anglais) 1341 ; une mémoire vive RAM (« Random Access Memory » en anglais) 1342 ; une mémoire morte ROM (« Read Only Memory » en anglais) 1343 ; une unité de stockage telle qu'un disque dur ou un lecteur de support de stockage, tel qu'un lecteur de cartes SD (« Secure Digital » en anglais) 1344 ; au moins une interface de communication 1345 permettant au dispositif noeud 134 de communiquer avec le dispositif concentrateur de données 12.

Le processeur 1341 est capable d'exécuter des instructions chargées dans la RAM 1342 à partir de la ROM 1343, d'une mémoire externe (non représentée), d'un support de stockage (tel qu'une carte SD), ou d'un réseau de communication. Lorsque le dispositif noeud 134 est mis sous tension, le processeur 1341 est capable de lire de la RAM 1342 des instructions et de les exécuter. Ces instructions forment un programme d'ordinateur causant la mise en oeuvre, par le processeur 1341, de tout ou partie du procédé décrit ci-après en relation avec les Figs. 3 à 6.

Le procédé décrit ci-après en relation avec les Figs. 3 à 6 peut être implémenté sous forme logicielle par exécution d'un ensemble d'instructions par une machine programmable, par exemple un DSP (« Digital Signal Processor » en anglais) ou un microcontrôleur, ou être implémentées sous forme matérielle par une machine ou un composant dédié, par exemple un FPGA (« Field-Programmable Gate Array » en anglais) ou un ASIC (« Application-Specific Integrated Circuit » en anglais).

La **Fig. 3** illustre schématiquement un procédé selon l'invention d'obtention d'une route de communication initiale entre le dispositif noeud 134 et le dispositif concentrateur de données 12.

En fonctionnement normal, le dispositif concentrateur de données 12 stocke dans sa mémoire RAM 122, pour chaque dispositif noeud auquel il est relié, une information représentative d'une route de communication vers ledit dispositif noeud. De plus, le dispositif concentrateur de données 12 stocke dans sa mémoire ROM 123 une variable booléenne BOOL_12 prenant la valeur « 0 » lorsque le dispositif concentrateur de données 12 est alimenté pour la première fois et tant que le réseau CPL 1 n'est pas initialisé, et la valeur « 1 », dès que le réseau CPL 1 a été initialisé au moins une fois, i.e. dès que chaque dispositif noeud du réseau CPL 1 a été associé au moins une fois à une route de communication. La mémoire RAM 122 est réinitialisée à chaque coupure d'alimentation électrique dans le réseau CPL 1, de sorte que le dispositif concentrateur de données perd chaque information représentative d'une route de communication. La mémoire ROM 123 quant à elle n'est pas réinitialisée par une coupure d'alimentation électrique. La mémoire ROM 123 ne peut être réinitialisée que par un opérateur. La variable booléenne BOOL_12 n'est donc pas modifiée lors d'une coupure d'alimentation électrique.

De manière similaire, en fonctionnement normal, le dispositif noeud 134 stocke dans sa mémoire RAM 1342, une information représentative d'une route de communication vers le dispositif concentrateur de données 12. De plus, le dispositif noeud 134 stocke dans sa mémoire ROM 1343 une variable booléenne BOOL_134 prenant la valeur « 0 » lorsque le dispositif noeud est alimenté pour la première fois et tant que le réseau CPL 1 n'est pas initialisé, et la valeur « 1 », dès que le réseau CPL 1 a été initialisé au moins une fois, i.e. dès que le dispositif noeud 134 a obtenu une route de communication vers le dispositif concentrateur de données 12. La mémoire RAM 1342 est réinitialisée à chaque coupure d'alimentation électrique dans le réseau CPL 1, de sorte que le dispositif noeud 134 perd l'information représentative de la route de communication. La mémoire ROM 1343 quant à elle n'est pas réinitialisée par une coupure d'alimentation électrique. La mémoire ROM 1343 ne peut être réinitialisée que par un opérateur. La variable booléenne BOOL_134 n'est donc pas modifiée lors d'une coupure d'alimentation électrique.

On suppose ici que le dispositif concentrateur de données 12 et le dispositif noeud 134 vérifient régulièrement l'état de leur RAM respective. Lorsque, lors d'une vérification, le dispositif concentrateur de données 12 constate que sa RAM 122 ne contient plus d'informations représentatives de routes de communications, il met en oeuvre le procédé décrit en relation avec la Fig. 3 pour les étapes qui le concernent. De même, lorsque, lors d'une vérification, le dispositif noeud 134 constate que sa RAM 1342 ne contient plus d'information représentative d'une route de communication vers le concentrateur de données 12, il met en oeuvre le procédé décrit en relation avec la Fig. 3 pour les étapes qui le concernent.

Dans une étape 30, le dispositif concentrateur de données 12 (respectivement le dispositif noeud 134) vérifie la valeur de la variable booléenne BOOL-12 (respectivement BOOL_134).

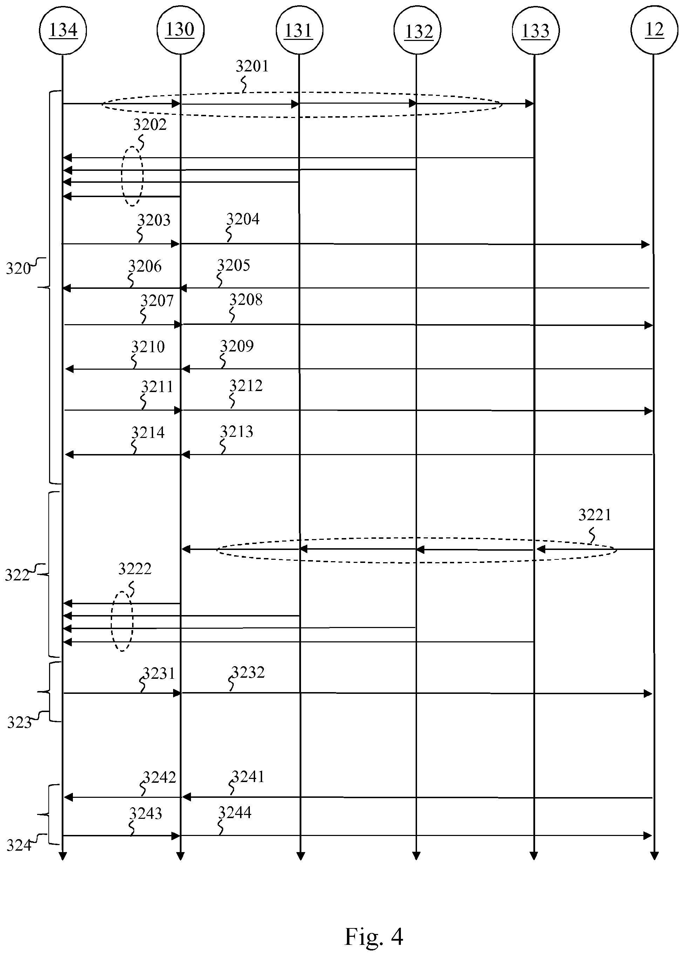

Lorsque la variable BOOL_12 (respectivement BOOL_134) est égale à la valeur « 0 », le dispositif concentrateur de données 12 (respectivement le dispositif noeud 134) conclut, lors d'une étape 31 que la réinitialisation de la RAM 122 (respectivement la RAM 1342) est due à une intervention d'un opérateur et qu'il n'y a pas de risque de surcharge du réseau CPL 1. Dans ce cas, lors d'une étape 32, le dispositif concentrateur de données 12 (respectivement le dispositif noeud 134) met en oeuvre des étapes le concernant de la méthode de recherche d'une route de communication initiale comprise dans le protocole G3-PLC que nous décrivons par la suite en relation avec la Fig. 4.

Lorsque la variable BOOL_12 (respectivement BOOL_134) est égale à la valeur « 1 », le dispositif concentrateur de données 12 (respectivement le dispositif noeud 134) conclut, lors d'une étape 31 que la réinitialisation de la RAM 122 (respectivement la RAM 1342) est due à une coupure d'alimentation du réseau CPL 1 et que suite à cette coupure d'alimentation électrique, il y a un risque de surcharge du réseau CPL 1.

Dans un mode de réalisation, lorsqu'il y a un risque de surcharge, le dispositif concentrateur de données 12 se met en attente d'un message d'authentification de la part du dispositif noeud 134. Lorsque le dispositif noeud 134 détermine qu'il y a un risque de surcharge, il tire aléatoirement une valeur de temps t entre la valeur « 0 » et une valeur de temps prédéfinie T et démarre une horloge. Lorsque l'horloge atteint la valeur de temps *t*, le dispositif noeud 134 lance les étapes qui le concernent de la méthode de recherche d'une route de communication initiale du protocole G3-PLC. On suppose ici que chaque dispositif noeud du réseau CPL 1 tire une valeur de temps t différente et que par conséquent, le risque de surcharge du réseau CPL 1 est faible lorsque chaque dispositif noeud lance les étapes qui le concernent de la méthode de recherche d'une route de communication initiale du protocole G3-PLC. Comme nous le verrons par la suite en relation avec la Fig. 4, les étapes de la méthode de recherche d'une route de communication initiale du protocole G3-PLC comprennent une étape d'envoi au dispositif concentrateur de données 12 d'un message d'authentification. Lorsque le dispositif concentrateur de données 12 reçoit un message d'authentification de la part du dispositif noeud 134, il peut lancer les étapes qui le concernent de la méthode de recherche d'une route de communication initiale du protocole G3-PLC.

On note que les dispositifs 130 à 133 fonctionnent de manière identique au dispositif noeud 134.

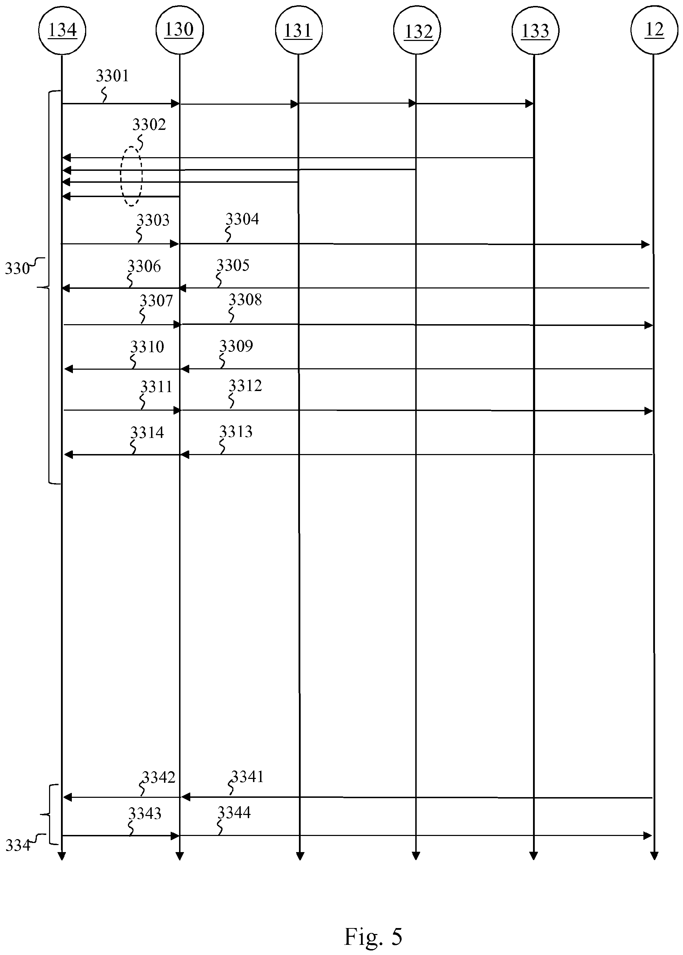

Dans un mode de réalisation, lorsqu'il y a un risque de surcharge du réseau CPL 1, le dispositif concentrateur de données 12 (respectivement le dispositif noeud 134) met en oeuvre, à la suite de l'étape 31, lors d'une étape 33, des étapes le concernant d'une méthode alternative de recherche de route de communication initiale décrite en relation avec la Fig. 5.

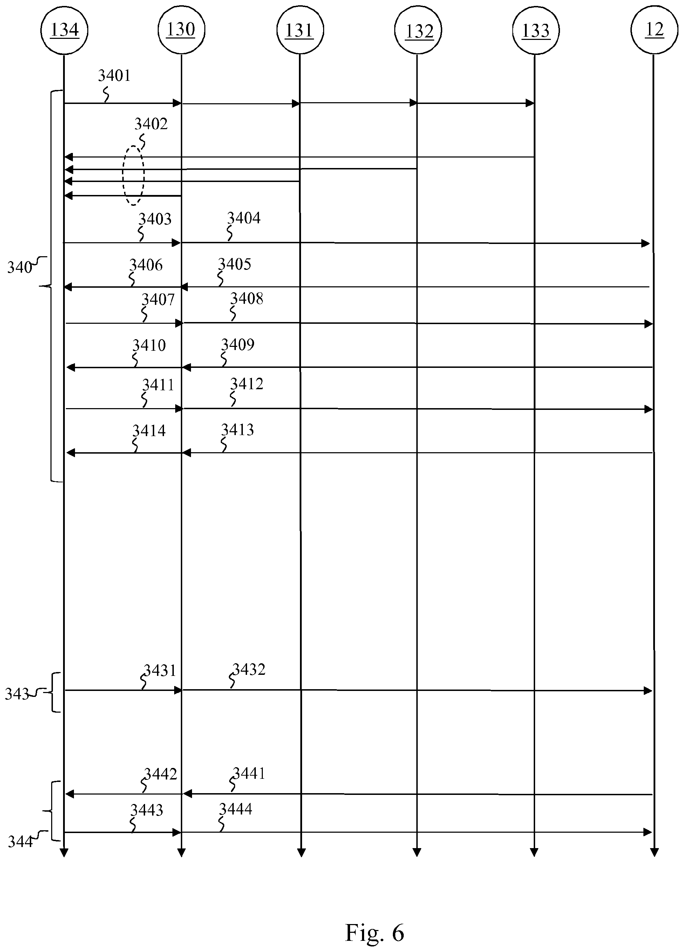

Dans un mode de réalisation, lorsqu'il y a un risque de surcharge du réseau CPL 1, le dispositif concentrateur de données 12 (respectivement le dispositif noeud 134) met en oeuvre, à la suite de l'étape 31, lors d'une étape 34, des étapes le concernant d'une méthode alternative de recherche de route de communication initiale décrite en relation avec la Fig. 6.

La **Fig. 4** illustre schématiquement la méthode de recherche d'une route de communication initiale comprise dans le protocole G3-PLC lorsqu'elle est mise en oeuvre dans le réseau CPL 1 entre le dispositif noeud 134 et le dispositif concentrateur de données 12 lors de l'étape 32.

La méthode de recherche d'une route de communication initiale débute par une première phase 320, dite phase d'authentification. Durant la phase d'authentification, des messages sont échangés entre le dispositif noeud 134 et le dispositif concentrateur de données 12, afin que ces deux dispositifs puissent s'authentifier mutuellement. Chaque échange de message pendant la phase d'authentification se fait en identifiant le dispositif noeud 134 par son adresse longue. En d'autres termes, chaque message échangé durant la phase d'authentification comprend une adresse longue de destination (réciproquement une adresse longue de source) de type adresse MAC (contrôle d'accès au médium, « Médium Access Control » en terminologie anglo-saxonne). Au cours de la phase d'authentification 320, le dispositif noeud 134, souhaitant établir une route de communication avec le dispositif concentrateur de données 12, envoie un message d'authentification au dispositif concentrateur de données 12. En réponse au message d'authentification, le dispositif concentrateur de données 12 transmet un message au dispositif noeud 134 contenant une adresse courte attribuée par le dispositif concentrateur de données 12 au dispositif noeud 134 et correspondant à l'adresse longue du dispositif noeud 134. L'adresse courte est utilisée dans chaque communication entre le dispositif noeud 134 et le concentrateur de données 12 suivant la phase d'authentification 320 à la place de l'adresse longue. Dans la phase d'authentification 320, l'adresse courte, contenue dans le message transmis par le dispositif concentrateur de données 12 en réponse au message d'authentification, est dans un format non interprétable par un dispositif intermédiaire du réseau via lequel transiterait ledit message. En effet, l'adresse courte est transmise dans un format crypté, le dispositif noeud 134 étant le seul dispositif noeud possédant des moyens pour décrypter l'adresse, tels que, par exemple, une clé de cryptage. Par exemple, comme nous le verrons par la suite, le dispositif noeud 130 par lequel transite le message contenant l'adresse courte, n'est pas capable d'interpréter l'adresse courte.

Dans un mode de réalisation, la phase d'authentification 320 utilise le protocole EAP-PSK (RFC-4764 : Méthode de protocole d'authentification extensible basé sur des clés pré-partagées, « A Pre-Shared Key (PSK) Extensible Authentication Protocol (EAP) Method », F. Bersani (France Telecom R&DH), Tschofenig (Siemens Networks GmbH & Co), January 2007). Ce mode de réalisation est décrit par des étapes 3201 à 3214.

Lors de l'étape 3201, le dispositif noeud 134 lance une procédure de détermination d'un meilleur voisin pour communiquer avec le dispositif concentrateur de données 12 en transmettant un message *BeaconReq* à ses voisins directs, *i.e.* les dispositifs noeuds 130 à 133. Le message *BeaconReq* est défini dans le protocole G3-PLC, et plus particulièrement dans le standard IEEE 802.15.4 qui est à la base du protocole G3-PLC.

En réponse au message *BeaconReq,* chaque dispositif noeud 130 à 133 transmet, lors d'une étape 3202, dans un message *BeaconResp* (défini dans le protocole G3-PLC) une information permettant au dispositif noeud 134 de déterminer quel est le meilleur voisin pour communiquer avec le dispositif concentrateur de données 12. Dans l'exemple décrit en relation avec la Fig. 4, le dispositif 130 est le meilleur voisin. Le meilleur voisin joue un rôle d'agent intermédiaire et est connu dans le protocole G3-PLC sous l'acronyme LBA (« 6LoWPAN Bootstrapping Agent » en terminologie anglo-saxonne).

Par la suite, chaque communication entre le dispositif noeud 134 et le dispositif concentrateur de données 12 de la phase d'authentification 320 passe par le dispositif noeud 130. Le dispositif noeud 130 sert, au moins temporairement, de relai au dispositif noeud 134.

Dans une étape 3203, le dispositif noeud 134 transmet en point à point au dispositif noeud 130 un message *JOINING,* défini dans le protocole G3-PLC, destiné au dispositif concentrateur de données 12. Le message *JOINING* comprend l'adresse longue du dispositif noeud 134, cette adresse longue étant utilisée par le dispositif concentrateur de données 12 pour obtenir une clé de cryptage partagée adéquate, permettant de sécuriser une authentification mutuelle entre le dispositif noeud 134 et le dispositif concentrateur de données 12. Dans une étape 3204, le dispositif noeud 130 retransmet en point à point le message *JOINING* qu'il a reçu au dispositif concentrateur de données 12.

Dans une étape 3205, le dispositif concentrateur de données 12 répond au message *JOINING* en envoyant en point à point, à destination du dispositif noeud 134, un message de type *premier message EAP-PSK,* décrit en section 5.1 du document RFC-4764, au dispositif noeud 130. Le message de type *premier message EAP-PSK* comprend un nombre aléatoire *RAND_S* et une information *ID_S* représentative d'une identité du dispositif concentrateur de données 12. Dans une étape 3206, le dispositif noeud 130 retransmet en point à point le message de type *premier message EAP-PSK* au dispositif noeud 134.

Dans une étape 3207, le dispositif noeud 134 répond au message de type *premier message EAP-PSK* en envoyant en point à point, à destination du dispositif concentrateur de données 12, un message de type *deuxième message EAP-PSK,* décrit en section 5.2 du document RFC-4764, au dispositif noeud 130. Le message de type *deuxième message EAP-PSK* comprend le nombre aléatoire *RAND_S,* un nombre aléatoire *RAND_P,* une information *ID_P* représentative de l'identité du dispositif noeud 134 et un code d'identification de message (CIM) calculé à partir d'une clé d'authentification, des nombres aléatoire *RAND_S* et *RAND_P* et des informations *ID_S* et *ID_P.* Dans une étape 3208, le dispositif noeud 130 retransmet en point à point le message de type *deuxième message EAP-PSK* au dispositif concentrateur de données 12. On note que le message de type *deuxième message EAP-PSK* est un message d'authentification.

Dans une étape 3209, le dispositif concentrateur de données 12 répond au message de type *deuxième message EAP-PSK* en envoyant en point à point, à destination du dispositif noeud 134, un message de type *troisième message EAP-PSK,* décrit en section 5.3 du document RFC-4764, au dispositif noeud 130. Le message de type *troisième message EAP-PSK* comprend le nombre aléatoire *RAND_S,* un CIM calculé à partir d'une clé d'authentification, du nombre aléatoire *RAND_P* et de l'information *ID_S* et une information *P_CHANNEL_S_0* représentative d'un canal protégé. L'information *P_CHANNEL_S_0* comprend une adresse courte attribuée par le dispositif concentrateur de données 12 au dispositif noeud 134 et correspondant à l'adresse longue du dispositif noeud 134. Dans l'information *P_CHANNEL_S_0,* l'adresse courte apparaît sous un format crypté. Dans une étape 3210, le dispositif noeud 130 retransmet en point à point le message de type *troisième message EAP-PSK* au dispositif noeud 134.

Dans une étape 3211, le dispositif noeud 134 répond au message de type *troisième message EAP-PSK* en envoyant en point à point, à destination du dispositif concentrateur de données 12, un message de type *quatrième message EAP-PSK,* décrit en section 5.4 du document RFC-4764, au dispositif noeud 130. Le message de type *quatrième message EAP-PSK* comprend le nombre aléatoire *RAND_S* et une information représentative du canal protégé *P_CHANNEL_P_1.* Dans une étape 3212, le dispositif noeud 130 retransmet en point à point le message de type *quatrième message EAP-PSK* au dispositif concentrateur de données 12.

Dans une étape 3213, le dispositif concentrateur de données 12 répond au message de type *quatrième message EAP-PSK* en envoyant en point à point, à destination du dispositif noeud 134, un message *ACCEPTED EAP SUCCESS* défini dans le protocole G3-PLC. Dans une étape 3214, le dispositif noeud 130 retransmet le message *ACCEPTED EAP SUCCESS* au dispositif noeud 134. L'échange du message *ACCEPTED EAP SUCCESS* permet de mettre fin à la phase d'authentification 320 et d'indiquer que la phase d'authentification 320 s'est déroulée correctement.

On peut noter que le protocole G3-PLC prévoit que la route de communication utilisée durant la phase d'authentification puisse être stockée dans des tables de routage des dispositifs impliqués dans les communications entre le dispositif noeud 134, et le dispositif concentrateur de données 12, *i.e.* le dispositif noeud 134, le dispositif concentrateur de données 12 et les éventuelles dispositifs intermédiaires. La route de communication ainsi stockée peut servir de route de communication initiale pour les communications entre le dispositif noeud 134, et le dispositif concentrateur de données 12.

La phase d'authentification 320 est suivie d'une deuxième phase, dite phase de recherche d'une meilleure route de communication 322 tirée du protocole G3-PLC. Durant la phase de recherche d'une meilleure route de communication, des messages sont échangés entre le dispositif noeud 134 et le dispositif concentrateur de données 12, afin de définir une meilleure route de communication, suivant un critère prédéfini, entre le dispositif noeud 134 et le dispositif concentrateur de données 12. Chaque échange de message pendant la phase de recherche d'une meilleure route de communication se fait en adresse courte. En d'autres termes, chaque message échangé durant la phase de recherche d'une meilleure route de communication comprend une adresse courte de destination (réciproquement une adresse courte de source). L'adresse courte du dispositif concentrateur de données 12 est en général une adresse par défaut connue de chaque dispositif noeud du réseau CPL 1. L'adresse courte du dispositif noeud 134 est celle attribuée au dispositif noeud 134 par le dispositif concentrateur de données 12. Utiliser des adresses courtes permet essentiellement d'être plus économique en termes d'utilisation de bande passante. Au début de la phase de recherche d'une meilleure route de communication, la meilleure route de communication entre le dispositif noeud 134 et le dispositif concentrateur de données 12 n'est pas connue. La phase de recherche d'une meilleure route de communication consiste à tester chaque route de communication possible et à en retenir une. Pour ce faire, des messages sont transmis en mode multidiffusion (« broadcast » en terminologie anglo-saxonne) dans le réseau CPL 1. Dans l'exemple d'écrit en relation avec la Fig. 4, durant la phase de recherche d'une meilleure route de communication 322, lors d'une étape 3221, le dispositif concentrateur de données 12 envoie, en mode multidiffusion, sur le réseau CPL 1, une requête de recherche de route («route request » en terminologie anglo-saxonne) comportant une adresse de destination correspondant à l'adresse courte du dispositif noeud 134. Cette requête de recherche de route est reçue par chaque dispositif noeud du réseau CPL 1 à portée du dispositif concentrateur de données 12, *i.e.* les dispositifs noeuds 130 à 133.

Une route de communication entre deux dispositifs d'un réseau peut comprendre un unique lien de communication, dans ce cas ladite route de communication relie directement les deux dispositifs, ou une pluralité de liens, dans ce cas la route de communication traverse au moins un dispositif intermédiaire. Le protocole G3-PLC définit le coût d'une route de communication comme une somme de coûts de liens composant cette route de communication. La requête de recherche de route comprend une information de coût de route. Lorsqu'un dispositif reçoit une requête de recherche de route, que cette requête lui soit destinée ou destinée à un autre dispositif, le dispositif met à jour l'information de coût de route contenue dans ladite requête en y ajoutant le coût du dernier lien traversé par ladite requête.

Lors d'une étape 3222 chaque dispositif noeud ayant reçu la requête de recherche de route, met à jour l'information de coût de route et retransmet en mode multidiffusion la requête de recherche de route. La requête de recherche de route ainsi retransmise est reçue par chaque dispositif noeud du réseau CPL 1 a portée des dispositifs noeuds 130 à 133, en dehors du dispositif concentrateur de données 12 qui est à l'origine de la requête de recherche de route. Dans l'exemple décrit en relation avec la Fig. 1, les dispositifs noeuds du réseau CPL 1 a portée des dispositifs noeuds 130 à 133 comprennent le dispositif noeud 134. Lorsqu'il reçoit les requêtes de recherche de route émanant des dispositifs noeuds 130 à 133, le dispositif noeud 134, reconnait son adresse courte. De cette manière, le dispositif noeud 134 sait qu'il est le destinataire des requêtes de recherche de route qu'il a reçue. Le dispositif noeud 134 met alors à jour les informations de coût de route contenues dans ces requêtes et recherche une route ayant une information de coût de route minimale. La route de communication associée au coût de route minimal parmi les routes de communications suivies par les requêtes de recherche de route est alors sélectionnée par le dispositif noeud 134 pour communiquer avec le dispositif concentrateur de données 12. Dans l'exemple décrit en relation avec la Fig. 4, la meilleure route de communication sélectionnée par le dispositif noeud 134 passe par le dispositif noeud 130.

La phase de recherche d'une meilleure route de communication 322 est suivie d'une troisième phase 323, dite phase de confirmation de route. Durant la phase de confirmation de route, lors d'une étape 3231, le dispositif noeud 134 transmet à destination du dispositif concentrateur de données 12, un message, dit message de réponse de route (« route reply » en terminologie anglo-saxonne), comprenant une information représentative de la route de communication sélectionnée par le dispositif noeud 134 sur la base des coûts de route qu'il a reçus. Le message est transmis en utilisant la meilleure route de communication sélectionnée par le dispositif noeud 134, cette route de communication passant par le dispositif noeud 130. Lorsqu'il reçoit le message de réponse de route, le dispositif noeud 130 mémorise dans une table de routage la route de communication sélectionnée par le dispositif noeud 134. Dans une étape 3232, le dispositif noeud 130 retransmet en point à point le message de réponse de route au dispositif concentrateur de données 12. En recevant le message de réponse de route, le dispositif concentrateur de données 12 est informé de la route de communication sélectionnée par le dispositif noeud 134. A partir de l'étape 3232, toutes les communications entre le dispositif noeud 134 et le dispositif concentrateur de données 12 utilisent la route de communication sélectionnée par le dispositif noeud 134.

La phase de confirmation de route est suivie d'une quatrième phase 324, dite phase d'échange de données applicatives. Dans une étape 3241, le dispositif concentrateur de données 12 transmet en point à point un premier message contenant des données applicatives au dispositif noeud 130 à destination du dispositif noeud 134. Dans une étape 3242, le dispositif noeud 130 retransmet en point à point le premier message au dispositif noeud 134. Dans une étape 3243, le dispositif noeud 134 transmet en point à point un second message contenant des données applicatives au dispositif noeud 130 à destination du dispositif concentrateur de données 12. Dans une étape 3244, le dispositif noeud 130 retransmet en point à point le second message au dispositif concentrateur de données 12. D'autres étapes, non représentées, similaires aux étapes 3241 à 3244 sont mises en oeuvre durant la phase d'échange de données applicatives.

La **Fig. 5** illustre schématiquement un premier exemple de méthode alternative de recherche de route initiale selon l'invention. L'exemple de méthode alternative de recherche de route de communication initiale de la Fig. 5 correspond à l'étape 33 décrite en relation avec la Fig. 3.

La méthode alternative de recherche de route de communication initiale de la Fig. 5 comprend deux phases. Une première phase 330, dite phase d'authentification alternative, est proche de la phase d'authentification 320 décrite en relation avec la Fig. 4. La phase d'authentification alternative 330 comprend des étapes 3301 à 3308 et 3311 à 3314 respectivement identiques aux étapes 3201 à 3208 et 3211 à 3214 décrites en relation avec la Fig. 4. Dans une étape 3309, le dispositif concentrateur de données 12 répond au message de type *deuxième message EAP-PSK* en envoyant en point à point, à destination du dispositif noeud 134, un message similaire à un message de type *troisième message EAP-PSK* dit message de type *troisième message EAP-PSK de substitution,* au dispositif noeud 130. Ledit message de type *troisième message EAP-PSK de substitution* comprend le nombre aléatoire *RAND_S,* un CIM calculé à partir d'une clé d'authentification, du nombre aléatoire *RAND_P* et de l'information *ID_S* et une information *P_CHANNEL_S_0* représentative d'un canal protégé. Toutefois, alors que l'information *P_CHANNEL_S_0* comprise dans le message de type *troisième message EAP-PSK* comprenait une adresse courte attribuée au dispositif noeud 134 dans un format non interprétable par un dispositif intermédiaire traversé par le message de type *troisième message EAP-PSK,* l'information *P_CHANNEL_S_0* comprise dans le message de type *troisième message EAP-PSK de substitution* comprend une adresse courte attribuée au dispositif noeud 134 dans un format interprétable par un dispositif intermédiaire traversé par le message de type *troisième message EAP-PSK de* substitution. Dans un mode de réalisation, l'adresse courte n'est pas cryptée dans le message de type *troisième message EAP-PSK de substitution.* Dans une étape 3310, le dispositif noeud 130 retransmet en point à point le message de type *troisième message EAP-PSK de substitution* au dispositif noeud 134. Lorsqu'un dispositif intermédiaire, tel que le dispositif 130, reçoit un message de type *troisième message EAP-PSK de substitution,* il est capable de récupérer l'adresse courte attribuée au dispositif noeud 134. Connaissant l'adresse courte attribuée au dispositif noeud 134, lorsque le dispositif noeud 130 reçoit un message indiquant une adresse de destination correspondant à l'adresse courte du dispositif noeud 134, le dispositif noeud 130 est capable de router correctement ledit message au dispositif noeud 134. Avec un message de type *troisième message EAP-PSK,* le dispositif noeud 130 n'aurait pas été capable de récupérer l'adresse courte attribuée au dispositif noeud 134 et donc, sans la phase de recherche d'une meilleure route de communication 322, le dispositif noeud n'aurait pas été capable de router correctement un message indiquant une adresse de destination correspondant à l'adresse courte du dispositif noeud 134.

Lors de l'envoi du message *ACCEPTED EAP SUCCESS* lors de l'étape 3313, le concentrateur de données 12 mémorise la route de communication vers le dispositif noeud 134 passant par le noeud 130 puisque cette route de communication a été utilisée lors de la phase d'authentification. De même, le noeud 130, sur réception du message *ACCEPTED EAP SUCCESS* lors de l'étape 3313, mémorise dans une table de routage une route de communication vers l'adresse courte du dispositif noeud 134, passant par le prochain noeud menant à l'adresse longue du noeud 134 (dans ce cas, c'est le dispositif noeud 134 lui-même). Cette correspondance entre la route de communication vers l'adresse longue du dispositif noeud 134 et l'adresse courte correspondante était déjà connue par le dispositif noeud 130 dès réception du message de type *troisième message EAP-PSK de substitution* lors de l'étape 3309.

La phase d'authentification alternative 330 est suivie d'une phase d'échange de données applicatives 334. Cette phase d'échange de données applicatives 334 comprend des étapes 3341 à 3344 respectivement similaires aux étapes 3241 à 3244. La seule différence entre les étapes 3341 à 3344 et les étapes 3241 à 3244 étant que la route de communication utilisée est la route de communication définie lors des étapes 3313 et 3314 et non une route de communication sélectionnée lors d'une phase de recherche d'une meilleure route de communication.

La **Fig. 6** illustre schématiquement un second exemple de méthode alternative de recherche de route de communication initiale selon l'invention. L'exemple de méthode alternative de recherche de route de communication initiale de la Fig. 6 correspond à l'étape 34 décrite en relation avec la Fig. 3.

La méthode alternative de recherche de route de communication initiale de la Fig. 6 comprend trois phases. Une première phase 340 est une phase d'authentification identique à la phase d'authentification 320. La phase d'authentification 340 comprend des étapes 3401 à 3414 respectivement identiques aux étapes 3201 à 3214.

La phase d'authentification 340 est suivie d'une phase de confirmation de route alternative 343. La phase de confirmation de route alternative 343 est proche de la phase de confirmation de route 323. Lors d'une étape 3431, le dispositif noeud 134 transmet en point à point à destination du dispositif concentrateur de données 12, un message de réponse de route comprenant une information représentative de la route de communication définie lors des étapes 3401 et 3402. En effet, au lieu de choisir une route de communication vers le dispositif concentrateur de données 12 sur la base d'une comparaison de coûts de route reçus dans des requêtes de recherche de route, le dispositif noeud 134 transmet le message de réponse de route au dispositif noeud 130, . Le choix du dispositif noeud 130 par le dispositif noeud 134 est guidé par le fait que le dispositif noeud 134 sait que le dispositif noeud 130 dispose d'une route de communication opérationnelle vers le dispositif concentrateur de données 12 puisque l'ensemble des messages échangés pendant la phase d'authentification 340 transitant par le noeud 130 ont été échangés avec succès. Le dispositif noeud 130, en recevant le message de réponse de route lors de l'étape 3431, est capable d'utiliser des informations contenues dans le message de réponse de route, et notamment de récupérer l'adresse courte du dispositif noeud 134 contenue dans le message de réponse de route dans un format interprétable par le dispositif noeud 130, afin de mémoriser une route de communication vers l'adresse courte du dispositif noeud 134, et de router le message de confirmation de route vers le dispositif concentrateur de données 12. Ainsi, lorsque le noeud 130 reçoit un message comprenant une adresse de destination correspondant à l'adresse courte du dispositif noeud 134, il est capable de router convenablement ce message au dispositif noeud 134. Dans une étape 3432, le dispositif noeud 130 retransmet en point à point le message réponse de route au dispositif concentrateur de données 12. Par ailleurs, en recevant le message de réponse de route, le dispositif concentrateur de données 12 est informé de la route de communication à utiliser pour communiquer avec le dispositif noeud 134. A partir de l'étape 3432, toutes les communications entre le dispositif noeud 134 et le dispositif concentrateur de données 12 utilisent la route de communication définie lors des étapes 3401 et 3402.

On remarque donc que la phase de confirmation de route 343 est mise en oeuvre par le dispositif noeud 134 et le dispositif concentrateur de données 12 sans qu'une phase de recherche d'une meilleure route de communication équivalente à la phase de recherche d'une meilleure route de communication 322 n'ait été mise en oeuvre. La phase d'authentification 340 et la phase de confirmation de route 343 sont donc consécutives.

La phase de confirmation de route alternative 343 est suivie d'une phase d'échange de données applicatives 344. Cette phase d'échange de données applicatives 344 comprend des étapes 3441 à 3444 respectivement similaires aux étapes 3241 à 3244. La seule différence entre les étapes 3441 à 3444 et les étapes 3241 à 3244 étant que la route de communication utilisée est la route de communication définie lors des étapes 3401 et 3402 et non une route de communication sélectionnée lors d'une phase de recherche d'une meilleure route de communication.

Dans le mode de réalisation décrit en relation avec la Fig. 6, le dispositif concentrateur de données 12 retarde l'envoi du message contenant des données applicatives lors de l'étape 3441 afin de laisser le temps au dispositif noeud 134 d'effectuer la phase de confirmation de route alternative 343. Après un délai prédéfini, en l'absence de réception du message de confirmation de route, et donc sans aucune route de communication valide vers le noeud 134, le dispositif concentrateur de données 12 met en oeuvre les étapes qui le concernent de la phase de recherche d'une meilleure route de communication 322, afin d'obtenir une route de communication avec le dispositif noeud 134. Le dispositif concentrateur de données 12 met ensuite en oeuvre les étapes qui le concerne des phases de confirmation de route 323 et d'échange de données applicatives 324 En parallèle, le dispositif noeud 134 met en oeuvre les étapes qui le concernent des phases de recherche d'une meilleure route 322, de confirmation de route 323 et d'échange de données applicatives 324.

Dans un mode de réalisation, la phase de recherche d'une meilleure route de communication est mise en oeuvre par le dispositif noeud 134 et le dispositif concentrateur de données 12 suite à l'étape 33 ou 34 lorsque le risque de surcharge du réseau est redevenu faible. Ainsi, après mise en oeuvre de la phase de recherche d'une meilleure route de communication, une meilleure route de communication remplace la route de communication initiale obtenue par la méthode alternative de recherche de route initiale.

Ceci peut se faire après une durée aléatoire pour chaque dispositif noeud, après qu'une route de communication initiale ait été obtenue. Ceci évite que tous les dispositifs noeud transmettent une requête de recherche de route, en mode multidiffusion, simultanément.

Le dispositif concentrateur de données 12 peut également effectuer une observation du trafic de données entrant (authentifications) et sortant (demandes d'interrogation des dispositifs noeuds) et décider de mettre en oeuvre la phase de recherche d'une meilleure route de communication 322 quand le trafic est inférieur à un seuil prédéfini.

## Revendications

1. Procédé d'obtention d'une route de communication initiale entre un dispositif noeud (134) et un dispositif concentrateur de données (12) d'un réseau (1) utilisant des communications par courants porteurs en ligne basées sur un protocole de communication comprenant une méthode (32) de recherche d'une route de communication initiale, ladite méthode comprenant une première phase (320), dite phase d'authentification, durant laquelle un premier dispositif souhaitant établir une route de communication vers un second dispositif envoie (3207) un message d'authentification audit second dispositif, en réponse duquel, ledit second dispositif transmet (3209) un message audit premier dispositif comprenant une adresse courte attribuée audit premier dispositif dans un format non interprétable par un dispositif intermédiaire du réseau (1) via lequel transiterait ledit message, ladite adresse courte étant utilisée pour chaque échange de messages entre le premier et le second dispositif suivant la phase d'authentification, une seconde phase (322), dite phase de recherche d'une meilleure route de communication, durant laquelle, ledit second dispositif envoie en mode multidiffusion dans le réseau (1) une requête de recherche de route, et une troisième phase (323), dite phase de confirmation de route, durant laquelle le premier dispositif transmet un message au second dispositif comprenant une information représentative d'une route de communication sélectionnée suivant un critère prédéfini, **caractérisé en ce que**, ledit procédé comprend les étapes suivantes:
appliquer (32) ladite méthode de recherche d'une route de communication initiale pour déterminer la route de communication initiale lorsqu'une information représentative d'un risque de surcharge du réseau indique une absence de risque de surcharge et, lorsque l'information représentative d'un risque de surcharge indique que le réseau risque d'être surchargé, une méthode alternative de recherche d'une route de communication initiale (34) est mise en oeuvre, la méthode alternative de recherche d'une route de communication initiale (34) comprenant deux phases, une première phase (340) correspondant à la phase d'authentification et une seconde phase (343) correspondant à la phase de confirmation de route, la première phase (340) et la seconde phase (343) étant consécutives.

2. Procédé selon la revendication 1 **caractérisé en ce que**, ladite seconde phase (343) correspondant à la phase de confirmation de route est mise en oeuvre dès réception (3414) par le dispositif noeud (134) d'un message clôturant la première phase (340) correspondant à la phase d'authentification.

3. Procédé selon l'une quelconque des revendications précédentes **caractérisé en ce que**, le protocole de communication est le protocole G3-PLC.

4. Procédé d'obtention d'une route de communication initiale entre un dispositif noeud (134) et un dispositif concentrateur de données (12), le dispositif noeud (134) et le dispositif concentrateur de données (12) étant compris dans un réseau (1) utilisant des communications par courants porteurs en ligne basées sur un protocole de communication comprenant une méthode (32) de recherche d'une route de communication initiale, ladite méthode comprenant une première phase (320), dite phase d'authentification, durant laquelle un premier dispositif mettant en oeuvre la méthode et souhaitant établir une route de communication vers un second dispositif envoie (3207) un message d'authentification audit second dispositif, en réponse duquel, le premier dispositif reçoit (3210) un message comprenant une adresse courte attribuée au premier dispositif par le second dispositif dans un format non interprétable par un dispositif intermédiaire du réseau via lequel transiterait ledit message, ladite adresse courte étant utilisée pour chaque échange de messages entre le premier et le second dispositif suivant la phase d'authentification, une seconde phase (322), dite phase de recherche d'une meilleure route de communication, durant laquelle, le premier dispositif sélectionne une meilleure route de communication suivant un critère prédéfini parmi un ensemble de routes de communication possibles entre le premier dispositif et le second dispositif, et une troisième phase (323), dite phase de confirmation de route, durant laquelle le premier dispositif transmet un message au second dispositif comprenant une information représentative de la meilleure route de communication sélectionnée, **caractérisé en ce que** ledit procédé comprend les étapes suivantes:
appliquer (32) ladite méthode de recherche d'une route de communication initiale pour déterminer la route de communication initiale lorsqu'une information représentative d'un risque de surcharge du réseau indique une absence de risque de surcharge et, lorsque ladite information indique que le réseau risque d'être surchargé , une méthode alternative de recherche d'une route de communication initiale (34) est mise en oeuvre, la méthode alternative de recherche d'une route de communication initiale (34) comprenant deux phases, une première phase (340) correspondant à la phase d'authentification et une seconde phase (343) correspondant à la phase de confirmation de route, la première phase (340) et la seconde phase (343) étant consécutives.

5. Procédé d'obtention d'une route de communication initiale entre un dispositif noeud (134) et un dispositif concentrateur de données (12), le dispositif concentrateur de données (12) et le dispositif noeud (134) étant compris dans un réseau (1) utilisant des communications par courants porteurs en ligne basées sur un protocole de communication comprenant une méthode (32) de recherche d'une route de communication initiale, ladite méthode comprenant une première phase (320), dite phase d'authentification, durant laquelle un second dispositif mettant en oeuvre ladite méthode reçoit (3208) un message d'authentification d'un premier dispositif souhaitant établir une route de communication avec le second dispositif, en réponse duquel, le second dispositif transmet (3209) un message au premier dispositif comprenant une adresse courte attribuée au premier dispositif dans un format non interprétable par un dispositif intermédiaire du réseau (1) via lequel transiterait ledit message, ladite adresse courte étant utilisée pour chaque échange de messages entre le premier et le second dispositif suivant la phase d'authentification, une seconde phase (322), dite phase de recherche d'une meilleure route de communication, durant laquelle, le second dispositif envoie (3221) en mode multidiffusion dans le réseau (1) une requête de recherche de route, et une troisième phase (323), dite phase de confirmation de route, durant laquelle le second dispositif reçoit (3232) un message du premier dispositif comprenant une information représentative d'une meilleure route de communication sélectionnée par le premier dispositif suivant un critère prédéfini, **caractérisé en ce que** ledit procédé comprend les étapes suivantes:
appliquer (32) ladite méthode de recherche d'une route de communication initiale pour déterminer la route de communication initiale lorsqu'une information représentative d'un risque de surcharge du réseau indique une absence de risque de surcharge et, lorsque ladite information indique que le réseau risque d'être surchargé, une méthode alternative de recherche d'une route de communication initiale (34) est mise en oeuvre, la méthode alternative de recherche d'une route de communication initiale (34) comprenant deux phases, une première phase (340) correspondant à la phase d'authentification et une seconde phase (343) correspondant à la phase de confirmation de route, la première phase (340) et la seconde phase (343) étant consécutives.

6. Système adapté pour obtenir une route de communication initiale, ledit système étant compris dans un réseau (1) utilisant des communications par courants porteurs en ligne basées sur un protocole de communication comprenant une méthode (32) de recherche d'une route de communication initiale, ladite méthode (32) comprenant une première phase (320), dite phase d'authentification, durant laquelle un premier dispositif souhaitant établir une route de communication vers un second dispositif envoie (3207) un message d'authentification au second dispositif, en réponse duquel, le second dispositif transmet (3209) un message au premier dispositif comprenant une adresse courte attribuée au premier dispositif dans un format non interprétable par un dispositif intermédiaire du réseau via lequel transiterait ledit message, ladite adresse courte étant utilisée pour chaque échange de messages entre le premier et le second dispositif suivant la phase d'authentification (320), une seconde phase (322), dite phase de recherche d'une meilleure route de communication, durant laquelle, le second dispositif envoie (3221) en mode multidiffusion dans le réseau (1) une requête de recherche de route, et une troisième phase (324), dite phase de confirmation de route, durant laquelle le premier dispositif transmet un message au second dispositif comprenant une information représentative d'une meilleure route de communication sélectionnée suivant un critère prédéfini, **caractérisé en ce que** ledit système comprend les moyens suivants:
des moyens de traitement (32) pour appliquer ladite méthode de recherche d'une route de communication initiale pour déterminer la route de communication initiale lorsqu'une information représentative d'un risque de surcharge du réseau indique une absence de risque de surcharge et, des moyens pour appliquer une méthode alternative de recherche d'une route de communication initiale (34) lorsque ladite information indique que le réseau risque d'être surchargé, la méthode alternative de recherche d'une route de communication initiale (34) comprenant deux phases, une première phase (340) correspondant à la phase d'authentification et une seconde phase (343) correspondant à la phase de confirmation de route, la première phase (340) et la seconde phase (343) étant consécutives.

7. Dispositif noeud (134) adapté pour obtenir une route de communication initiale vers un dispositif concentrateur de données (12), ledit dispositif noeud (134) et ledit dispositif concentrateur de données (12) étant compris dans un réseau (1) utilisant des communications par courants porteurs en ligne basées sur un protocole de communication comprenant une méthode (32) de recherche d'une route de communication initiale, ladite méthode (32) comprenant une première phase (320), dite phase d'authentification, durant laquelle un premier dispositif mettant en oeuvre la méthode et souhaitant établir une route de communication vers un second dispositif envoie (3207) un message d'authentification audit second dispositif, en réponse duquel, le premier dispositif reçoit (3210) un message comprenant une adresse courte attribuée au premier dispositif par le second dispositif dans un format non interprétable par un dispositif intermédiaire du réseau via lequel transiterait ledit message, ladite adresse courte étant utilisée pour chaque échange de message entre le premier et le second dispositif suivant la phase d'authentification (320), une seconde phase (322), dite phase de recherche d'une meilleure route de communication, durant laquelle, le premier dispositif sélectionne une meilleure route de communication suivant un critère prédéfini parmi un ensemble de routes de communication possibles entre le premier dispositif et le second dispositif, et une troisième phase (324), dite phase de confirmation de route, durant laquelle le premier dispositif transmet un message au second dispositif comprenant une information représentative de la meilleure route de communication sélectionnée, **caractérisé en ce que** ledit dispositif noeud comprend les moyens suivants:
des moyens (32) de traitement pour appliquer ladite méthode de recherche d'une route de communication initiale pour déterminer la route de communication initiale lorsqu'une information représentative d'un risque de surcharge du réseau indique une absence de risque de surcharge et, des moyens pour appliquer une méthode alternative de recherche d'une route de communication initiale (34) lorsque ladite information indique que le réseau risque d'être surchargé, la méthode alternative de recherche d'une route de communication initiale (34) comprenant deux phases, une première phase (340) correspondant à la phase d'authentification et une seconde phase (343) correspondant à la phase de confirmation de route, la première phase (340) et la seconde phase (343) étant consécutives.

8. Dispositif concentrateur de données (12) adapté pour obtenir une route de communication initiale entre un dispositif noeud (134) et le dispositif concentrateur de données (12), le dispositif concentrateur de données (12) et le dispositif noeud (134) étant compris dans un réseau (1) utilisant des communications par courants porteurs en ligne basées sur un protocole de communication comprenant une méthode (32) de recherche d'une route de communication initiale, ladite méthode (32) comprenant une première phase (320), dite phase d'authentification, durant laquelle un second dispositif mettant en oeuvre la méthode reçoit (3208) un message d'authentification d'un premier dispositif souhaitant établir une route de communication avec le second dispositif, en réponse duquel, ledit second dispositif transmet (3209) un message audit premier dispositif comprenant une adresse courte attribuée au premier dispositif par le second dispositif dans un format non interprétable par un dispositif intermédiaire du réseau via lequel transiterait ledit message, ladite adresse courte étant utilisée pour chaque échange de messages entre le premier et le second dispositif suivant la phase d'authentification, une seconde phase (322), dite phase de recherche d'une meilleure route de communication, durant laquelle, le second dispositif envoie (3221) en mode multidiffusion dans le réseau (1) une requête de recherche de route, et une troisième phase (323), dite phase de confirmation de route, durant laquelle le second dispositif reçoit (3232) un message du premier dispositif comprenant une information représentative d'une meilleure route de communication sélectionnée par le premier dispositif suivant un critère prédéfini, **caractérisé en ce que** ledit dispositif concentrateur de données comprend les moyens suivants :
des moyens (32) de traitement pour appliquer ladite méthode de recherche d'une route de communication initiale pour obtenir l'information représentative de la route de communication initiale lorsqu'une information représentative d'un risque de surcharge du réseau indique une absence de risque de surcharge et, des moyens pour appliquer une méthode alternative de recherche d'une route de communication initiale (34) lorsque ladite information indique que le réseau risque d'être surchargé, la méthode alternative de recherche d'une route de communication initiale (34) comprenant deux phases, une première phase (340) correspondant à la phase d'authentification et une seconde phase (343) correspondant à la phase de confirmation de route, la première phase (340) et la seconde phase (343) étant consécutives.

9. Programme d'ordinateur, **caractérisé en ce qu'**il comprend des instructions pour mettre en oeuvre, par un dispositif (12, 134), le procédé selon l'une des revendications 4 ou 5, lorsque ledit programme est exécuté par un processeur (121, 1341) dudit dispositif (12, 134).

10. Moyens de stockage, **caractérisés en ce qu'**ils stockent un programme d'ordinateur comprenant des instructions pour mettre en oeuvre, par un dispositif (12, 134), le procédé selon l'une des revendications 4 ou 5, lorsque ledit programme est exécuté par un processeur (121, 1341) dudit dispositif (12, 134).

## Patentansprüche

1. Verfahren zum Erhalt einer Anfangskommunikationsroute zwischen einer Knotenvorrichtung (134) und einer Datenkonzentratorvorrichtung (12) eines auf einem Kommunikationsprotokoll basierende Powerline-Kommunikationen verwendenden Netzwerks (1), das eine Methode (32) der Suche einer Anfangskommunikationsroute enthält, wobei die Methode eine erste Phase (320), Authentifizierungsphase genannt, während der eine erste Vorrichtung, die eine Kommunikationsroute zu einer zweiten Vorrichtung aufbauen möchte, eine Authentifizierungsmitteilung an die zweite Vorrichtung sendet (3207), als Antwort worauf die zweite Vorrichtung eine Mitteilung an die erste Vorrichtung überträgt (3209), die eine der ersten Vorrichtung zugeordnete Kurzadresse in einem Format enthält, das nicht von einer Zwischenvorrichtung des Netzwerks (1) interpretiert werden kann, über die die Mitteilung gehen würde, wobei die Kurzadresse für jeden Austausch von Mitteilungen zwischen der ersten und der zweiten Vorrichtung nach der Authentifizierungsphase verwendet wird, eine zweite Phase (322), Suchphase einer besseren Kommunikationsroute genannt, während der die zweite Vorrichtung im Netzwerk (1) eine Routensuchanforderung im Multicast-Modus sendet, und eine dritte Phase (323), Routenbestätigungsphase genannt, enthält, während der die erste Vorrichtung eine Mitteilung an die zweite Vorrichtung überträgt, die eine für eine gemäß einem vordefinierten Kriterium ausgewählte Kommunikationsroute repräsentative Information enthält, **dadurch gekennzeichnet, dass** das Verfahren die folgenden Schritte enthält:
Anwenden (32) der Suchmethode einer Anfangskommunikationsroute, um die Anfangskommunikationsroute zu bestimmen, wenn eine für eine Überlastungsgefahr des Netzwerks repräsentative Information eine Abwesenheit einer Überlastungsgefahr anzeigt, und wenn die für eine Überlastungsgefahr repräsentative Information anzeigt, dass das Netzwerk möglicherweise überlastet ist, eine alternative Suchmethode einer Anfangskommunikationsroute (34) durchgeführt wird, wobei die alternative Suchmethode einer Anfangskommunikationsroute (34) zwei Phasen enthält, eine erste Phase (340) entsprechend der Authentifizierungsphase und eine zweite Phase (343) entsprechend der Routenbestätigungsphase, wobei die erste Phase (340) und die zweite Phase (343) aufeinander folgen.

2. Verfahren nach Anspruch 1, **dadurch gekennzeichnet, dass** die zweite Phase (343) entsprechend der Routenbestätigungsphase bei Empfang (3414) einer Mitteilung durch die Knotenvorrichtung (134) durchgeführt wird, die die erste Phase (340) entsprechend der Authentifizierungsphase beendet.

3. Verfahren nach einem der vorhergehenden Ansprüche, **dadurch gekennzeichnet, dass** das Kommunikationsprotokoll das Protokoll G3-PLC ist.

4. Verfahren zum Erhalt einer Anfangskommunikationsroute zwischen einer Knotenvorrichtung (134) und einer Datenkonzentratorvorrichtung (12), wobei die Knotenvorrichtung (134) und die Datenkonzentratorvorrichtung (12) in einem auf einem Kommunikationsprotokoll basierende Powerline-Kommunikationen verwendenden Netzwerk (1) enthalten sind, das eine Methode (32) der Suche einer Anfangskommunikationsroute enthält, wobei die Methode eine erste Phase (320), Authentifizierungsphase genannt, während der eine erste Vorrichtung, die die Methode durchführt und eine Kommunikationsroute zu einer zweiten Vorrichtung aufbauen möchte, eine Authentifizierungsmitteilung an die zweite Vorrichtung sendet (3207), als Antwort worauf die erste Vorrichtung von der zweiten Vorrichtung eine Mitteilung empfängt (3210), die eine von der zweiten Vorrichtung der ersten Vorrichtung zugeordnete Kurzadresse in einem Format enthält, das nicht von einer Zwischenvorrichtung des Netzwerks interpretiert werden kann, über die die Mitteilung gehen würde, wobei die Kurzadresse für jeden Austausch von Mitteilungen zwischen der ersten und der zweiten Vorrichtung nach der Authentifizierungsphase verwendet wird, eine zweite Phase (322), Suchphase einer besseren Kommunikationsroute genannt, während der die erste Vorrichtung eine bessere Kommunikationsroute gemäß einem vordefinierten Kriterium unter eine Einheit von möglichen Kommunikationsrouten zwischen der ersten Vorrichtung und der zweiten Vorrichtung auswählt, und eine dritte Phase (323) enthält, Routenbestätigungsphase genannt, während der die erste Vorrichtung eine Mitteilung an die zweite Vorrichtung überträgt, die eine für die ausgewählte bessere Kommunikationsroute repräsentative Information enthält, **dadurch gekennzeichnet, dass** das Verfahren die folgenden Schritte enthält:
Anwenden (32) der Suchmethode einer Anfangskommunikationsroute, um die Anfangskommunikationsroute zu bestimmen, wenn eine für eine Überlastungsgefahr des Netzwerks repräsentative Information eine Abwesenheit einer Überlastungsgefahr anzeigt, und wenn die Information anzeigt, dass das Netzwerk möglicherweise überlastet ist, eine alternative Suchmethode einer Anfangskommunikationsroute (34) durchgeführt wird, wobei die alternative Suchmethode einer Anfangskommunikationsroute (34) zwei Phasen enthält, eine erste Phase (340) entsprechend der Authentifizierungsphase und eine zweite Phase (343) entsprechend der Routenbestätigungsphase, wobei die erste Phase (340) und die zweite Phase (343) aufeinander folgen.

5. Verfahren zum Erhalt einer Anfangskommunikationsroute zwischen einer Knotenvorrichtung (134) und einer Datenkonzentratorvorrichtung (12), wobei die Datenkonzentratorvorrichtung (12) und die Knotenvorrichtung (134) in einem auf einem Kommunikationsprotokoll basierende Powerline-Kommunikationen verwendenden Netzwerk (1) enthalten sind, das eine Methode (32) der Suche einer Anfangskommunikationsroute enthält, wobei die Methode eine erste Phase (320), Authentifizierungsphase genannt, während der eine die Methode durchführende zweite Vorrichtung eine Authentifizierungsmitteilung von einer ersten Vorrichtung empfängt (3208), die eine Kommunikationsroute mit der zweiten Vorrichtung aufbauen möchte, als Antwort worauf die zweite Vorrichtung eine Mitteilung an die erste Vorrichtung überträgt (3209), die eine der ersten Vorrichtung zugeordnete Kurzadresse in einem Format enthält, das nicht von einer Zwischenvorrichtung des Netzwerks (1) interpretiert werden kann, über die die Mitteilung gehen würde, wobei die Kurzadresse für jeden Austausch von Mitteilungen zwischen der ersten und der zweiten Vorrichtung nach der Authentifizierungsphase verwendet wird, eine zweite Phase (322), Suchphase einer besseren Kommunikationsroute genannt, während der die zweite Vorrichtung im Netzwerk (1) eine Routensuchanforderung im Multicast-Modus sendet, und eine dritte Phase (323), Routenbestätigungsphase genannt, enthält, während der die zweite Vorrichtung eine Mitteilung von der ersten Vorrichtung empfängt (3232), die eine für eine von der ersten Vorrichtung gemäß einem vordefinierten Kriterium ausgewählte bessere Kommunikationsroute repräsentative Information enthält, **dadurch gekennzeichnet, dass** das Verfahren die folgenden Schritte enthält:
Anwenden (32) der Suchmethode einer Anfangskommunikationsroute, um die Anfangskommunikationsroute zu bestimmen, wenn eine für eine Überlastungsgefahr des Netzwerks repräsentative Information eine Abwesenheit einer Überlastungsgefahr anzeigt, und wenn die Information anzeigt, dass das Netzwerk möglicherweise überlastet ist, eine alternative Suchmethode einer Anfangskommunikationsroute (34) durchgeführt wird, wobei die alternative Suchmethode einer Anfangskommunikationsroute (34) zwei Phasen enthält, eine erste Phase (340) entsprechend der Authentifizierungsphase und eine zweite Phase (343) entsprechend der Routenbestätigungsphase, wobei die erste Phase (340) und die zweite Phase (343) aufeinander folgen.

6. System, das für den Erhalt einer Anfangskommunikationsroute geeignet ist, wobei das System in einem auf einem Kommunikationsprotokoll basierende Powerline-Kommunikationen verwendenden Netzwerk (1) enthalten ist, das eine Methode (32) der Suche einer Anfangskommunikationsroute enthält, wobei die Methode (32) eine erste Phase (320), Authentifizierungsphase genannt, während der eine erste Vorrichtung, die eine Kommunikationsroute zu einer zweiten Vorrichtung aufbauen möchte, eine Authentifizierungsmitteilung an die zweite Vorrichtung sendet (3207), als Antwort worauf die zweite Vorrichtung eine Mitteilung an die erste Vorrichtung überträgt (3209), die eine der ersten Vorrichtung zugeordnete Kurzadresse in einem Format enthält, das nicht von einer Zwischenvorrichtung des Netzwerks (1) interpretiert werden kann, über die die Mitteilung gehen würde, wobei die Kurzadresse für jeden Austausch von Mitteilungen zwischen der ersten und der zweiten Vorrichtung nach der Authentifizierungsphase verwendet wird, eine zweite Phase (322), Suchphase einer besseren Kommunikationsroute genannt, während der die zweite Vorrichtung im Netzwerk (1) eine Routensuchanforderung im Multicast-Modus sendet, und eine dritte Phase (323), Routenbestätigungsphase genannt, enthält, während der die erste Vorrichtung eine Mitteilung an die zweite Vorrichtung überträgt, die eine für eine gemäß einem vordefinierten Kriterium ausgewählte bessere Kommunikationsroute repräsentative Information enthält, **dadurch gekennzeichnet, dass** das System die folgenden Einrichtungen enthält:
Verarbeitungseinrichtungen (32) zur Anwendung der Suchmethode einer Anfangskommunikationsroute, um die Anfangskommunikationsroute zu bestimmen, wenn eine für eine Überlastungsgefahr des Netzwerks repräsentative Information eine Abwesenheit einer Überlastungsgefahr anzeigt, und Einrichtungen zur Anwendung einer alternativen Suchmethode einer Anfangskommunikationsroute (34), wenn die Information anzeigt, dass das Netzwerk möglicherweise überlastet ist, wobei die alternative Suchmethode einer Anfangskommunikationsroute (34) zwei Phasen enthält, eine erste Phase (340) entsprechend der Authentifizierungsphase und eine zweite Phase (343) entsprechend der Routenbestätigungsphase, wobei die erste Phase (340) und die zweite Phase (343) aufeinander folgen.

7. Knotenvorrichtung (134), die geeignet ist, eine Anfangskommunikationsroute zu einer Datenkonzentratorvorrichtung (12) zu erhalten, wobei die Knotenvorrichtung (134) und die Datenkonzentratorvorrichtung (12) in einem auf einem Kommunikationsprotokoll basierende Powerline-Kommunikationen verwendenden Netzwerk (1) enthalten sind, das eine Methode (32) der Suche einer Anfangskommunikationsroute enthält, wobei die Methode (32) eine erste Phase (320), Authentifizierungsphase genannt, während der eine erste Vorrichtung, die die Methode durchführt und eine Kommunikationsroute zu einer zweiten Vorrichtung aufbauen möchte, eine Authentifizierungsmitteilung an die zweite Vorrichtung sendet (3207), als Antwort worauf die erste Vorrichtung eine Mitteilung empfängt (3210), die eine von der zweiten Vorrichtung der ersten Vorrichtung zugeordnete Kurzadresse in einem Format enthält, das nicht von einer Zwischenvorrichtung des Netzwerks interpretiert werden kann, über die die Mitteilung gehen würde, wobei die Kurzadresse für jeden Mitteilungsaustausch zwischen der ersten und der zweiten Vorrichtung nach der Authentifizierungsphase verwendet wird (320), eine zweite Phase (322), Suchphase einer besseren Kommunikationsroute genannt, während der die erste Vorrichtung eine bessere Kommunikationsroute gemäß einem vordefinierten Kriterium unter einer Einheit von möglichen Kommunikationsrouten zwischen der ersten Vorrichtung und der zweiten Vorrichtung aussucht, und eine dritte Phase (324), Routenbestätigungsphase genannt, enthält, während der die erste Vorrichtung eine Mitteilung an die zweite Vorrichtung überträgt, die eine für die ausgewählte bessere Kommunikationsroute repräsentative Information enthält, **dadurch gekennzeichnet, dass** die Knotenvorrichtung die folgenden Einrichtungen enthält:
Verarbeitungseinrichtungen (32) zur Anwendung der Suchmethode einer Anfangskommunikationsroute, um die Anfangskommunikationsroute zu bestimmen, wenn eine für eine Überlastungsgefahr des Netzwerks repräsentative Information eine Abwesenheit einer Überlastungsgefahr anzeigt, und Einrichtungen zur Anwendung einer alternativen Suchmethode einer Anfangskommunikationsroute (34), wenn die Information anzeigt, dass das Netzwerk möglicherweise überlastet ist, wobei die alternative Suchmethode einer Anfangskommunikationsroute (34) zwei Phasen enthält, eine erste Phase (340) entsprechend der Authentifizierungsphase und eine zweite Phase (343) entsprechend der Routenbestätigungsphase, wobei die erste Phase (340) und die zweite Phase (343) aufeinander folgen.

8. Datenkonzentratorvorrichtung (12), die geeignet ist, eine Anfangskommunikationsroute zwischen einer Knotenvorrichtung (134) und der Datenkonzentratorvorrichtung (12) zu erhalten, wobei die Datenkonzentratorvorrichtung (12) und die Knotenvorrichtung (134) in einem auf einem Kommunikationsprotokoll basierende Powerline-Kommunikationen verwendenden Netzwerk (1) enthalten sind, das eine Methode (32) der Suche eines Anfangskommunikationsroute enthält, wobei die Methode (32) eine erste Phase (320), Authentifizierungsphase genannt, während der eine zweite Vorrichtung, die die Methode durchführt, eine Authentifizierungsmitteilung von einer ersten Vorrichtung empfängt (3208), die eine Kommunikationsroute zu der zweiten Vorrichtung aufbauen möchte, als Antwort worauf die zweite Vorrichtung eine Mitteilung an die erste Vorrichtung überträgt (3209), die eine der ersten Vorrichtung durch die zweite Vorrichtung zugeordnete Kurzadresse in einem Format enthält, das nicht von einer Zwischenvorrichtung des Netzwerks interpretiert werden kann, über die die Mitteilung gehen würde, wobei die Kurzadresse für jeden Austausch von Mitteilungen zwischen der ersten und der zweiten Vorrichtung nach der Authentifizierungsphase verwendet wird, eine zweite Phase (322), Suchphase einer besseren Kommunikationsroute genannt, während der die zweite Vorrichtung im Netzwerk (1) eine Routensuchanforderung im Multicast-Modus sendet (3221), und eine dritte Phase (323), Routenbestätigungsphase genannt, enthält, während der die zweite Vorrichtung von der ersten Vorrichtung eine Mitteilung empfängt (3232), die eine für eine von der ersten Vorrichtung gemäß einem vordefinierten Kriterium ausgewählte bessere Kommunikationsroute repräsentative Information enthält, **dadurch gekennzeichnet, dass** die Datenkonzentratorvorrichtung die folgenden Einrichtungen enthält:
Verarbeitungseinrichtungen (32) zur Anwendung der Suchmethode einer Anfangskommunikationsroute, um die für die Anfangskommunikationsroute repräsentative Information zu erhalten, wenn eine für eine Überlastungsgefahr des Netzwerks repräsentative Information eine Abwesenheit einer Überlastungsgefahr anzeigt, und Einrichtungen zur Anwendung einer alternativen Suchmethode einer Anfangskommunikationsroute (34), wenn die Information anzeigt, dass das Netzwerk möglicherweise überlastet ist, wobei die alternative Suchmethode einer Anfangskommunikationsroute (34) zwei Phasen enthält, eine erste Phase (340) entsprechend der Authentifizierungsphase und eine zweite Phase (343) entsprechend der Routenbestätigungsphase, wobei die erste Phase (340) und die zweite Phase (343) aufeinander folgen.

9. Computerprogramm, **dadurch gekennzeichnet, dass** es Anweisungen enthält, um durch eine Vorrichtung (12, 134) das Verfahren nach einem der Ansprüche 4 oder 5 durchzuführen, wenn das Programm von einem Prozessor (121, 1341) der Vorrichtung (12, 134) ausgeführt wird.

10. Speichereinrichtungen, **dadurch gekennzeichnet, dass** sie ein Computerprogramm speichern, das Anweisungen zur Durchführung, durch eine Vorrichtung (12, 134), des Verfahrens nach einem der Ansprüche 4 oder 5 enthält, wenn das Programm von einem Prozessor (121, 1341) der Vorrichtung (12, 134) ausgeführt wird.

## Claims

1. Method for obtaining an initial communication route between a node device (134) and a data-concentrator device (12) of a network (1) using powerline communications based on a communication protocol comprising a scheme (32) for searching for an initial communication route, the said scheme comprising a first phase (320), termed the authentication phase, during which a first device wishing to establish a communication route to a second device dispatches (3207) an authentication message to the said second device, in response to which the said second device transmits (3209) a message to the said first device comprising a short address allotted to the said first device in a format uninterpretable by an intermediate device of the network (1) via which the said message would travel, the said short address being used for each exchange of messages between the first and the second device following the authentication phase, a second phase (322), termed the phase of searching for a better communication route, during which the said second device dispatches in multicast mode a route search request into the network (1), and a third phase (323), termed the route confirmation phase, during which the first device transmits a message to the second device comprising an information item representative of a communication route selected according to a predefined criterion, **characterized in that** the said method comprises the following steps:
apply (32) the said scheme for searching for an initial communication route to determine the initial communication route when an information item representative of a risk of overload of the network indicates an absence of risk of overload and, when the information item representative of a risk of overload indicates that the network risks being overloaded, an alternative scheme for searching for an initial communication route (34) is implemented, the alternative scheme for searching for an initial communication route (34) comprising two phases, a first phase (340) corresponding to the authentication phase and a second phase (343) corresponding to the route confirmation phase, the first phase (340) and the second phase (343) being consecutive.

2. Method according to Claim 1, **characterized in that** the said second phase (343) corresponding to the route confirmation phase is implemented immediately upon reception (3414) by the node device (134) of a message closing the first phase (340) corresponding to the authentication phase.

3. Method according to either one of the preceding claims, **characterized in that** the communication protocol is the G3-PLC protocol.

4. Method for obtaining an initial communication route between a node device (134) and a data-concentrator device (12), the node device (134) and the data-concentrator device (12) being included in a network (1) using powerline communications based on a communication protocol comprising a scheme (32) for searching for an initial communication route, the said scheme comprising a first phase (320), termed the authentication phase, during which a first device implementing the scheme and wishing to establish a communication route to a second device dispatches (3207) an authentication message to the said second device, in response to which the first device receives (3210) a message comprising a short address allotted to the first device by the second device in a format uninterpretable by an intermediate device of the network via which the said message would travel, the said short address being used for each exchange of messages between the first and the second device following the authentication phase, a second phase (322), termed the phase of searching for a better communication route, during which the first device selects a better communication route according to a criterion predefined from among a set of possible communication routes between the first device and the second device, and a third phase (323), termed the route confirmation phase, during which the first device transmits a message to the second device comprising an information item representative of the selected best communication route, **characterized in that** the said method comprises the following steps:
apply (32) the said scheme for searching for an initial communication route to determine the initial communication route when an information item representative of a risk of overload of the network indicates an absence of risk of overload and, when the said information item indicates that the network risks being overloaded, an alternative scheme for searching for an initial communication route (34) is implemented, the alternative scheme for searching for an initial communication route (34) comprising two phases, a first phase (340) corresponding to the authentication phase and a second phase (343) corresponding to the route confirmation phase, the first phase (340) and the second phase (343) being consecutive.

5. Method for obtaining an initial communication route between a node device (134) and a data-concentrator device (12), the data-concentrator device (12) and the node device (134) being included in a network (1) using powerline communications based on a communication protocol comprising a scheme (32) for searching for an initial communication route, the said scheme comprising a first phase (320), termed the authentication phase, during which a second device implementing the said scheme receives (3208) a message for authenticating a first device wishing to establish a communication route with the second device, in response to which the second device transmits (3209) a message to the first device comprising a short address allotted to the first device in a format uninterpretable by an intermediate device of the network (1) via which the said message would travel, the said short address being used for each exchange of messages between the first and the second device following the authentication phase, a second phase (322), termed the phase of searching for a better communication route, during which the second device dispatches (3221) in multicast mode a route search request into the network (1), and a third phase (323), termed the route confirmation phase, during which the second device receives (3232) a message of the first device comprising an information item representative of a better communication route selected by the first device according to a predefined criterion, **characterized in that** the said method comprises the following steps:
apply (32) the said scheme for searching for an initial communication route to determine the initial communication route when an information item representative of a risk of overload of the network indicates an absence of risk of overload and, when the said information item indicates that the network risks being overloaded, an alternative scheme for searching for an initial communication route (34) is implemented, the alternative scheme for searching for an initial communication route (34) comprising two phases, a first phase (340) corresponding to the authentication phase and a second phase (343) corresponding to the route confirmation phase, the first phase (340) and the second phase (343) being consecutive.

6. System adapted to obtain an initial communication route, the said system being included in a network (1) using powerline communications based on a communication protocol comprising a scheme (32) for searching for an initial communication route, the said scheme (32) comprising a first phase (320), termed the authentication phase, during which a first device wishing to establish a communication route to a second device dispatches (3207) an authentication message to the second device, in response to which the second device transmits (3209) a message to the first device comprising a short address allotted to the first device in a format uninterpretable by an intermediate device of the network via which the said message would travel, the said short address being used for each exchange of messages between the first and the second device following the authentication phase (320), a second phase (322), termed the phase of searching for a better communication route, during which the second device dispatches (3221) in multicast mode a route search request into the network (1), and a third phase (324), termed the route confirmation phase, during which the first device transmits a message to the second device comprising an information item representative of a better communication route selected according to a predefined criterion, **characterized in that** the said system comprises the following means:
processing means (32) for applying the said scheme for searching for an initial communication route to determine the initial communication route when an information item representative of a risk of overload of the network indicates an absence of risk of overload and means for applying an alternative scheme for searching for an initial communication route (34) when the said information item indicates that the network risks being overloaded, the alternative scheme for searching for an initial communication route (34) comprising two phases, a first phase (340) corresponding to the authentication phase and a second phase (343) corresponding to the route confirmation phase, the first phase (340) and the second phase (343) being consecutive.

7. Node device (134) adapted to obtain an initial communication route to a data-concentrator device (12), the said node device (134) and the said data-concentrator device (12) being included in a network (1) using powerline communications based on a communication protocol comprising a scheme (32) for searching for an initial communication route, the said scheme (32) comprising a first phase (320), termed the authentication phase, during which a first device implementing the scheme and wishing to establish a communication route to a second device dispatches (3207) an authentication message to the said second device, in response to which the first device receives (3210) a message comprising a short address allotted to the first device by the second device in a format uninterpretable by an intermediate device of the network via which the said message would travel, the said short address being used for each message exchange between the first and the second device following the authentication phase (320), a second phase (322), termed the phase of searching for a better communication route, during which the first device selects a better communication route according to a criterion predefined from among a set of possible communication routes between the first device and the second device, and a third phase (324), termed the route confirmation phase, during which the first device transmits a message to the second device comprising an information item representative of the selected best communication route, **characterized in that** the said node device comprises the following means:
processing means (32) for applying the said scheme for searching for an initial communication route to determine the initial communication route when an information item representative of a risk of overload of the network indicates an absence of risk of overload and means for applying an alternative scheme for searching for an initial communication route (34) when the said information item indicates that the network risks being overloaded, the alternative scheme for searching for an initial communication route (34) comprising two phases, a first phase (340) corresponding to the authentication phase and a second phase (343) corresponding to the route confirmation phase, the first phase (340) and the second phase (343) being consecutive.

8. Data-concentrator device (12) adapted to obtain an initial communication route between a node device (134) and the data-concentrator device (12), the data-concentrator device (12) and the node device (134) being included in a network (1) using powerline communications based on a communication protocol comprising a scheme (32) for searching for an initial communication route, the said scheme (32) comprising a first phase (320), termed the authentication phase, during which a second device implementing the scheme receives (3208) a message for authenticating a first device wishing to establish a communication route with the second device, in response to which the said second device transmits (3209) a message to the said first device comprising a short address allotted to the first device by the second device in a format uninterpretable by an intermediate device of the network via which the said message would travel, the said short address being used for each exchange of messages between the first and the second device following the authentication phase, a second phase (322), termed the phase of searching for a better communication route, during which the second device dispatches (3221) in multicast mode a route search request into the network (1), and a third phase (323), termed the route confirmation phase, during which the second device receives (3232) a message of the first device comprising an information item representative of a better communication route selected by the first device according to a predefined criterion, **characterized in that** the said data-concentrator device comprises the following means:
processing means (32) for applying the said scheme for searching for an initial communication route to obtain the information item representative of the initial communication route when an information item representative of a risk of overload of the network indicates an absence of risk of overload and means for applying an alternative scheme for searching for an initial communication route (34) when the said information item indicates that the network risks being overloaded, the alternative scheme for searching for an initial communication route (34) comprising two phases, a first phase (340) corresponding to the authentication phase and a second phase (343) corresponding to the route confirmation phase, the first phase (340) and the second phase (343) being consecutive.

9. Computer program, **characterized in that** it comprises instructions for implementing, by a device (12, 134), the method according to one of Claims 4 or 5, when the said program is executed by a processor (121, 1341) of the said device (12, 134).

10. Storage means, **characterized in that** they store a computer program comprising instructions for implementing, by a device (12, 134), the method according to one of Claims 4 or 5, when the said program is executed by a processor (121, 1341) of the said device (12, 134).
